# EUROPÄISCHE PATENTSCHRIFT

(11) **EP 0 760 061 B1**
(45) Veröffentlichungstag und Bekanntmachung des Hinweises auf die Patenterteilung: **03.05.2000**
(21) Anmeldenummer: 95909638.9
(22) Anmeldetag: 17.02.1995
(51) Int. Cl.: F16D 65/097

(54) **ZUSPANNVORRICHTUNG FÜR EINE SCHEIBENBREMSE**
DEVICE FOR APPLYING A DISC BRAKE
DISPOSITIF DE SERRAGE POUR FREIN A DISQUE

(30) Priorität: 20.05.1994 DE 4417783
(43) Veröffentlichungstag der Anmeldung: 05.03.1997
(73) Patentinhaber: KNORR-BREMSE Systeme für Nutzfahrzeuge GmbH, 80809 München (DE)
(72) Erfinder: BAUMGARTNER, Hans, D-85368 Moosburg (DE); BIEKER, Dieter, D-83080 Oberaudorf (DE); IRASCHKO, Johann, (DE)
(86) Internationale Anmeldenummer: DE9500210
(87) Internationale Veröffentlichungsnummer: WO9532370

(56) Entgegenhaltungen:
- EP-A- 0 045 671
- DE-A- 2 230 949
- DE-A- 3 023 103
- FR-A- 2 412 007
- GB-A- 959 183
- GB-A- 2 087 996
- GB-A- 2 147 069

## Beschreibung

Die vorliegende Erfindung bezieht sich auf eine Zuspannvorrichtung für eine Scheibenbremse gemäß dem Oberbegriff des Anspruchs 1. Gegenstand der vorliegenden Erfindung ist ferner ein nach der erfindungsgemäßen Lehre ausgebildeter Bremsbelag.

Bei herkömmlichen Zuspannvorrichtungen für eine Scheibenbremse ist üblicherweise ein Bremsbelagschacht zur Aufnahme eines von der Zuspannvorrichtung verschiebbaren Bremsbelags vorgesehen, der zwei in Zuspannrichtung verlaufende seitliche Führungsflächen aufweist, an denen der Bremsbelag mit seinen beiden Seitenkanten verschiebbar geführt ist.

Wenn die Zuspannvorrichtung zum Bremsen betätigt wird, wird der Bremsbelag von dieser zur Bremsscheibe hin geschoben und liegt mit seiner Reibfläche schließlich an der betreffenden Seitenfläche der Bremsscheibe an. Infolge der dabei auftretenden Brems-Reibungskräfte wird der Bremsbelag zur stromabseitigen bzw. auslaufseitigen Führungsfläche des Bremsbelagschachts hin bewegt und stützt sich sodann an dieser Führungsfläche ab. Im nicht zugespannten bzw. bremsfreien Zustand liegt der Bremsbelag hingegen vergleichsweise lose im Bremsbelagschacht.

Sobald der Bremsbelag beim Zuspannen der Scheibenbremse in der Anfangsphase des Bremsvorgangs an der Bremsscheibe anliegt und dabei schließlich, wie vorstehend erwähnt, die stromabseitige Führungsfläche des Bremsbelagschachts berührt, überträgt sich die Drehbewegungskraft der Bremsscheibe auf diese stromabseitige Abstützung des Bremsbelags und ruft dort eine der Zuspannkraft entgegenwirkende Reibungskraft hervor. Beim weiteren Zuspannen der Scheibenbremse muß daher diese Reibungskraft von der Zuspannvorrichung zusätzlich überwunden werden.

Bei den am häufigsten verwendeten Scheibenbremsen, bei denen auch die gattungsgemäßen Belagschächte üblicherweise verwendet werden, ist als Bremssattel ein sogenannter Schwimmsattel vorgesehen, der bei anliegendem Bremsbelag aufgrund der in Axialrichtung wirkenden Reaktionskräfte mit der Bremsscheibe in Gegenrichtung verschoben wird und dadurch einen auf der gegenüberliegenden Seite befindlichen, weiteren Bremsbelag gleichfalls gegen die Bremsscheibe preßt. Da dieser gegenüberliegenden Bremsbelag in einem zumindest weitgehend identisch ausgebildeten Belagschacht geführt ist, tritt an dessen stromabseitiger Führungsfläche eine ebenso große Reibungskraft auf; die Zuspannvorrichtung wird hierdurch zusätzlich beansprucht.

Die genannten Reibungskräfte an der jeweiligen stromabseitigen Führungsfläche des Belagschachts haben folglich zum einen den Nachteil, daß die Zuspannvorrichtung eine erhöhte Bremskraft aufbringen muß, wodurch der Gesamtwirkungsgrad der Scheibenbremse nicht unerheblich herabgesetzt wird. In der Praxis wird die erforderliche Bremskraft zwischen 10% und 30% erhöht.

Ein weiterer, noch gravierenderer Nachteil dieser unerwünschten Reibungskräfte liegt jedoch darin, daß hierdurch der sogenannte Umfangsschrägverschleiß hervorgerufen wird: herkömmliche Zuspannvorrichtungen leiten ihre Zuspannkraft nämlich mittig bzw. zentral in den Bremsbelag ein, während die jeweilige Reibungskraft der Bremsbeläge lediglich einseitig wirkt. Hierdurch ergibt sich insgesamt eine unsymmetrische Kraftverteilung im Bremsbelag, so daß dieser mit ungleichmäßiger Kraft gegen die Bremsscheibe gepreßt wird. Der Bremsbelag wird daher an seinem stromaufseitigen bzw. einlaufseitigen Bereich, wo die aufgebrachte Zuspannkraft größer ist, langfristig stärker abgerieben. Es ergibt sich somit ein in Umfangsrichtung schräg verlaufendes Abrieborofil, das die Lebensdauer des Bremsbelags entsprechend herabsetzt.

Aus der DE 22 30 949 A1 ist eine Zuspannvorrichtung für eine Scheibenbremse gemäß dem Oberbegriff des Anspruchs 1 bekannt, bei der vorgeschlagen wird, die nachteiligen Reibungskräfte an der stromabseitigen Führungsfläche des Belagschachts mittels einer in seitlicher Rohtung steifen Blattfeder zu verringern, die mindestens an einer Seite einer Druckplatte des Bremsbelags parallel zu dieser befestigt ist und mit ihrem einen Ende an der stromabseitigen Führungsfläche des Belagschachts anliegt. Sobald der Bremsbelag beim Zuspannen der Scheibenbremse in der Anfangsphase des Bremsvorgangs an der Bremsscheibe anliegt, stützt er sich über das Ende der Blattfeder an der Führungsfläche des Belagschachts ab; aufgrund der geringen Anlagefläche der Blattfeder tritt dort eine so hohe örtliche Reibungskraft auf, daß die Blattfeder beim weiteren Zuspannen nicht weiter verschoben werden kann, sondern sich statt dessen durchbiegt. Die Zuspannvorrichtung muß daher keine zusätzlichen Reibungskräfte überwinden, so daß der Bremswirkungsgrad deutlich erhöht wird, zumal die zum Durchbiegen der Blattfeder erforderliche Kraft relativ gering ist. Ein Nachteil dieser bekannten Zuspannvorrichtung liegt jedoch darin, daß das Durchbiegen der Blattfeder eine entsprechende Querlage des Bremsbelags hervorruft, so daß das Auftreten von Umfangsschrägverschleiß nicht verhindert werden kann.

In einer alternativen Ausführungsform der aus der DE 22 30 949 A1 bekannten Zuspannvorrichtung wird vorgeschlagen, den Bremsbelag an aus einer Wendel oder einem Stapel Unterlegscheiben bestehenden Führungsstangen verschiebbar zu la-. gern. Wenn der Bremsbelag beim Zuspannen der Scheibenbremse an der Bremsscheibe anliegt, wird die auslaufseitige Führungsstange durchgebogen, so daß auf den Bremsbelag keine Reibungskräfte übertragen werden. Da die zum Durchbiegen der Führungsstange erforderliche Kraft vergleichsweise klein ist, wird der Bremswirkungsgrad wie bei der erstgenannten Ausführungsform entsprechend erhöht. Aufgrund des Durchbiegens der Führungsstange kann jedoch eine Querlage des Bremsbelags ebensowenig verhindert werden, so daß gleichfalls ein Umfangsschrägverschleiß auftritt.

Der Erfindung liegt die Aufgabe zugrunde, eine Zuspannvorrichtung für eine Scheibenbremse gemäß dem Oberbegriff des Anspruchs 1 derart weiterzubilden, daß unter gleichzeitiger Verbesserung des Bremswirkungsgrads eine Minimierung des Umfangsschrägverschleißes erzielbar ist. Weiterhin soll ein Bremsbelag geschaffen werden, der sich ebenfalls durch eine Verbesserung des Bremswirkungsgrads auszeichnet und nur einem geringen Umfangsschrägverschleiß unterworfen ist.

Diese Aufgabe wird erfindungsgemäß mit den im Kennzeichnungsteil des Anspruchs 1 bzw. 14 angegebenen Maßnahmen gelöst.

Erfindungsgemäß ist demzufolge vorgesehen, die jeweilige Führungsfläche des Bremsbelagschachts durch eine Platte zu bilden, die derart an der zugeordneten Wandfläche des Bremsbelagschachts oder an der Seitenkante des Bremsbelags sitzt, daß sie gegenüber der Wandfläche in Zuspannrichtung über eine vorbestimmte Strecke roll- oder gleitverschiebbar gelagert ist. Aufgrund dieser Roll- oder Gleitlagerung wird somit erreicht, daß auf den Bremsbelag keinerlei Reibungskräfte übertragen werden, wenn der Bremsbelag beim Zuspannen der Scheibenbremse an der Bremsscheibe anliegt. Da die beim Bremsen auftretenden Reibungskäfte die in Zuspannrichtung gelagerte Platte zur Bremsscheibe hin verschieben, wird darüber hinaus erreicht, daß der Bremsbelag beim Bremsen im Gegensatz zu der bekannten Zuspannvorrichtung exakt parallel zur Bremsscheibe verschoben wird, d.h. keiner Verkantung unterzogen ist, so daß jeglicher Umfangsschrägverschleiß sicher vermieden werden kann.

Die vorbestimmte Strecke, um die die erfindungsgemäße Platte verschiebbar gelagert ist, muß in der Praxis mindestens so groß gewählt werden, wie die bei anliegendem Bremsbelag noch durchzuführende Verschiebestrecke. Diese ist jedoch relativ klein, so daß die Realisierung der verschiebbaren Lagerung keinerlei Probleme bereitet.

Gemäß der im Anspruch 2 angegebenen Weiterbildung der Erfindung empfiehlt es sich, die Platte entgegen der Zuspannrichtung derart vorzuspannen, daß sie sich nach Lösen der Bremse wieder in ihre Ausgangsstellung zurückbewegt. Hierdurch wird erreicht, daß die Funktionsfähigkeit der erfindungsgemäßen Lagerung zu jedem Zeitpunkt gegeben ist. Die gewünschte Vorspannkraft kann gemäß Anspruch 3 beispielsweise dadurch erzielt werden, daß die Platte von einem vorzugsweise aus Gummimaterial bestehenden Federelement entgegen der Zuspannrichtung vorgespannt wird. Die Platte sollte dabei nach der Lehre des Anspruchs 4 Teil eines Federbügelelements sein; ggf. kann dieses unter so großer Eigenelastizität eingespannt sein, daß die Vorspannkraft ohne zusätzliches Federelement erzielbar ist.

Eine besonders vorteilhafte und preisgünstige Lagerung des erfindungsgemäßen Federbügelelements ergibt sich nach Anspruch 5 dann, wenn das Federbügelelement auf einem im wesentlichen mit einem T-förmigen Querschnitt ausgebildeten Bereich des Bremsbelagschachts beispielsweise in einem Klemmsitz befesetigt wird. Wenn der Bremsbelag aus einem Bremsbelagmaterial und einer von der Zuspannvorrichtung beaufschlagten Druckplatte besteht, kann demgegenüber gemäß Anspruch 6 in Erwägung gezogen werden, das Federbügelelement an der Seitenkante der Druckplatte zu befestigen. Die erfindungsgemäße Einrichtung zur Verringerung der Reibungskräfte ist in diesem Fall Teil des betreffenden Bremsbelags, so daß auch bei älteren Zuspannvorrichtungen, ggf. im Rahmen eines ohnehin erforderlichen Bremsbelagwechsels, problemlos die Vorteile der Erfindung erzielbar sind.

Für die Zwecke der Erfindung sind nach der Lehre der Ansprüche 7 bis 11 verschiedene Lagervorrichtungen geeignet, nämlich insbesondere Gleitlager in Form eines Teflonlagers oder in Form von mehreren Stahllamellen oder auch ein aus mehreren Rollen gebildetes Rollenlager. Besonders kostengünstige und robuste Ausführungsformen des erfindungsgemäßen Stahllamellen- oder Rollenlagers sind dann erzielbar, wenn die Stahllamellen bzw. Rollen in einem Gummimaterial beispielsweise durch Einvulkanisierung eingebettet werden.

Die Reibungskraft läßt sich gemäß der im Anspruch 12 angegebenen Weiterbildung der Erfindung noch weiter herabsetzen, wenn die der Wandfläche des Bremsbelagschachts zugewandte Fläche der Platte als eine in Zuspannrichtung abfallende schiefe Ebene ausgebildet wird. In diesem Fall wird auf den Bremsbelag eine die restliche Reibungskraft überwindende Vorwärtskomponente der Reaktionskraft der auf die Platte einwirkenden Druckkraft übertragen.

Aus Kostengründen kann gemäß Anspruch 13 schließlich daran gedacht werden, die erfindungsgemäße Platte nur an derjenigen Seite des Bremsbelagschachts vorzusehen, die bei vorwärtsfahrt des Fahrzeugs die Auslaufseite ist. Bremsvorgänge während der Rückwärtsfahrt des Fahrzeugs sind nämlich wesentlich seltener und sind darüber hinaus mit meist geringeren Bremskräften verbunden, so daß das Fehlen der erfindungsgemäßen Platte dort ggf. ohne Nachteile in Kauf genommen werden kann.

Gemäß der Lehre der Ansprüche 14 bis 20 soll mit der Erfindung auch ein Bremsbelag unter Schutz gestellt werden, an dessen Seitenkante(n) die erfindungsgemäße Platte vorgesehen ist.

Die Erfindung wird nachstehend anhand der Beschreibung von Ausführungsbeispielen unter Bezugnahme auf die Zeichnung näher erläutert. Es zeigen:
Fig.1A und 1B anhand von Querschnittsansichten den schematischen Aufbau eines ersten Ausführungsbeispiels der Zuspannvorrichtung, bei dem ein Teflonlager verwendet wird;
Fig.2A und 2B eine alternative Ausführungsform der in den Fig.1A und 1B gezeigten Zuspannvorrichtung;
Fig.3A und 3B eine weitere Alternative der in den Fig.1A und 1B gezeigten Zuspannvorrichtung;
Fig.4A und 4B ein zweites Ausführungsbeispiel der Zuspannvorrichtung, bei dem ein Stahllamellenlager verwendet wird;
Fig.5A und 5B eine alternative Ausführungsform der in den Fig.4A und 4B gezeigten Zuspannvorrichtung;
Fig.6A bis 6D ein drittes Ausführungsbeispiel der Zuspannvorrichtung, bei dein ein Stahlrollenlager verwendet wird;
Fig.7A und 7B eine alternative Ausführungsform der in den Fig.6A bis 6D gezeigten Zuspannvorrichtung;
Fig.8A und 8B ein viertes Ausführungsbeispiel der Zuspannvorrichtung, bei dem eine alternative Ausführungsform eines Federbügelelements verwendet wird; und
Fig.9A und 9B ein Ausführungsbeispiel einer am Bremsbelag befestigten gleitgelagerten Platte.

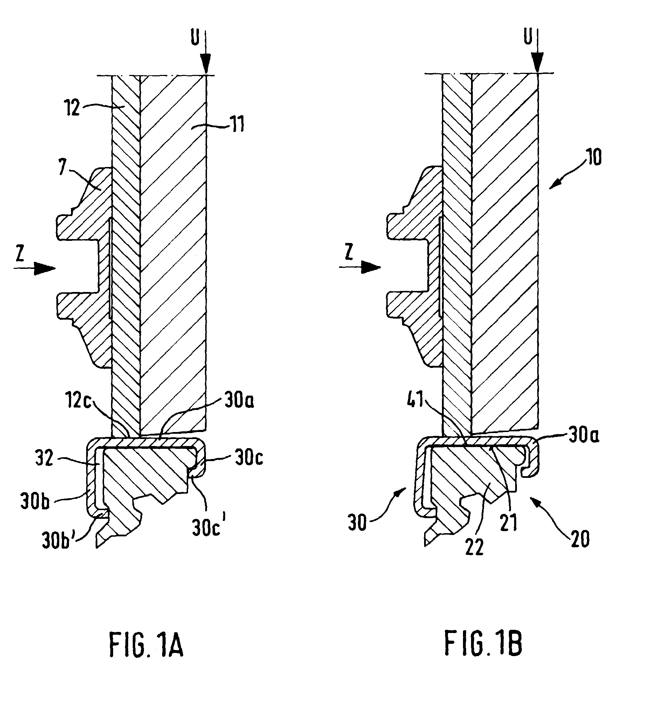

Unter Bezugnahme auf die Figuren 1 bis 3 wird nunmehr zunächst ein erstes Ausführungsbeispiel der Erfindung näher beschrieben. Bei diesem ersten Ausführungsbeispiel ist ein Federbügelelement 30 an einem Bereich 22 eines Bremsbelagschachts 20 unter Zwischenschaltung einer Teflonschicht 41 festgeklemmt. Ein mit dem Bezugszeichen 10 bezeichneter Bremsbelag besteht aus einer Druckplatte 12 und einem an dieser befestigten Bremsbelagmaterial 11, dessen der Druckplatte 12 abgewandte Fläche zum Bremsen mit der zugeordneten Reibfläche einer (nicht gezeigten) Bremsscheibe in Berührung gebracht wird; in den Zeichnungen wird angenommen, daß sich die Bremsscheibe in der mit dem Pfeil U bezeichneten Richtung dreht. Eine Zuspannvorrichtung ist lediglich schematisch durch einen Druckstempel 7 angedeutet, der beim Zuspannen der Scheibenbremse, d.h. bei der Bremsbetätigung, in einer mit dem Pfeil Z angegebenen Richtung bewegt wird.

Vorab sei noch darauf hingewiesen, daß in der Zeichnung sämtliche mit dem Buchstaben A bezeichneten Figuren den unbetätigten Zustand der Bremse oder einen Anfangszustand der Bremsbetätigung zeigen, während die mit dem Buchstaben B bezeichneten Figuren denjenigen Betätigungszustand der Bremse zeigen, bei der Bremsbelag 10 (bzw. dessen Bremsbelagmaterial 11) bereits unter einem bestimmten Bremsdruck an der Reibfläche der Bremsscheibe anliegt. Ferner ist anzumerken, daß der Bremsbelagschacht 20 selbstverständlich auch einen den Bereich 22 gegenüberliegenden und entsprechend geformten Bereich aufweist, der die zweite Seitenwand des Bremsbelagschachts 20 bildet. Wenn der links gezeigte Bereich 20 diejenige Seite des Bremsbelagschachts 20 darstellt, die bei Vorwärtsfahrt des Fahrzeugs die Auslaufseite ist, ist es unter Umständen nicht erforderlich, an dem nicht gezeigten gegenüberliegenden Seitenbereich ebenfalls ein an einer Teflonschicht 41 verschiebbar gelagertes Federbügelelement 30 vorzusehen, da die Bremsbelastung bei Rückwärtsfahrt eines Fahrzeugs in der Regel geringer ist. Wenn die betreffende Scheibenbremse jedoch eine Feststelleinrichtung zum Bilden einer Feststellbremse aufweist, ist es gleichwohl ratsam, die erfindungsgemäße Belagabstützung an beiden Seitenbereichen des Bremsbelagschachts 20 vorzusehen, da insbesondere beim Abstellen eines Fahrzeugs an einer Steigung auch in Rückwärtsrichtung hohe Bremskräfte auftreten können.

Eine erste Ausführungsform des ersten Ausführungsbeispiels der Erfindung wird nun unter Bezugnahme auf die Figuren 1A und 1B näher erläutert. Bei dieser Ausführungsform ist das Federbügelelement 30 im wesentlichen als U-Stück ausgebildet, das aus einer einer Seitenkante 12c der Druckplatte 12 zugewandten Platte 30a, einem der Zuspannvorrichtung zugewandten Klemmabschnitt 30b und einem der Bremsscheibe zugewandten Klemmabschnitt 30c gebildet ist. Die beiden Klemmabschnitte 30b und 30c umgreifen den T-förmig ausgebildeten Bereich 22 des Bremsbelagschachts 20 und weisen jeweils zu diesem hingebogene Abschnitte 30b' bzw. 30c' auf. Aufgrund dieser Anordnung sitzt das Federbügelelement 30 ausreichend fest am T-förmigen Bereich 22 des Bremsbelagschachts 20; ggf. kann in Erwägung gezogen werden, eine zusätzliche Befestigung des Federbügelelements 30 vorzusehen, beispielsweise mittels Schrauben oder durch Anschweißen am Abschnitt 30b'.

Zwischen dem oberen Klemmabschnitt 30b und dem Bereich 22 des Bremsbelagschachts 20 ist ein Zwischenraum 32 vorgesehen, der dem Federbügelelement 30 bzw. dessen der Druckplatte 12 zugewandten Platte 30a eine in Zuspannrichtung verlaufende Relativverschiebung gegenüber der Wandfläche 21 des Bereichs 22 erlaubt, und zwar über eine vorbestimmte Strecke, die im wesentlichen durch die Größe des Zwischenraums 32 definiert ist. Die Länge dieser Strecke entspricht mindestens der Länge der Verschiebestrecke, um die der Bremsbelag 10 von der Zuspannvorrichtung 7 noch verschoben werden kann, wenn er an der Bremsscheibe anliegt. Sobald die von der Seitenkante 12c der Druckplatte 12 des Bremsbelags 10 auf die Platte 30a ausgeübte Druckkraft beim Lösen der Bremse entfällt, wird die Platte 30a durch die Federkraft des Klemmabschnitts 30b entgegen der Zuspannrichtung Z wieder in die Ausgangslage zurückgebracht.

Die zwischen der Platte 30a und der Wandfläche 21 des Bremsbelagschachts 20 angeordnete Teflonschicht 41 kann beispielsweise ein fertig erhältliches Teflon-Gleitlager sein, das beispielsweise durch Kleben entweder an der Platte 30a oder an der Wandfläche 21 befestigt ist.

Die erfindungsgemäße Lagervorrichtung arbeitet wie folgt: beim Beginn der Bremsbetätigung wird der Druckstempel 7 der Zuspannvorrichtung zunächst über eine vorbestimmte, einem Lüftspiel der Bremse entsprechende Strecke in Zuspannrichtung Z verschoben. Der vom Druckstempel 7 beaufschlagte Bremsbelag 10 wird daher ebenfalls zur Bremsscheibe hin verschoben. Da das Bremsbelagmaterial 11 des Bremsbelags 10 während dieser Anfangsphase der Verschiebung jedoch noch nicht an der Bremsscheibe anliegt, wird der Bremsbelag 10 zu diesem Zeitpunkt noch mit keiner Querkraftkomponente beaufschlagt. Selbst wenn die Seitenkante 12c der Druckplatte 12 des Bremsbelags 10 zu diesem Zeitpunkt bereits an der Platte 30a anliegt, ist die auf die Platte 30a ausgeübte Reibungskraft noch so gering, daß die Platte 30a nicht oder nur geringfügig aus ihrer in Fig.1A gezeigten Ausgangslage gebracht wird; die Seitenkante 12c gleitet somit entlang der Platte 30a.

Erst wenn das Bremsbelagmaterial 11 des Bremsbelags 10 bei weiterer Zuspannung an der Bremsscheibe anliegt, wird der Bremsbelag 10 durch Reibung mit einer Querkraftkomponente beaufschlagt, die bewirkt, daß seine Seitenkante 12c eine entsprechende Kraft auf die Platte 30a ausübt. Die Platte 30a wird daher in die in Fig.1B gezeigte Lage verschoben, wobei aufgrund des Teflonlagers 41 nahezu keine Reibung auftritt. Die von dem Druckstempel 7 der Zuspannvorrichtung erzeugte Zustellkraft wird daher kaum behindert, so daß sich der Wirkungsgrad der Zuspannung kaum nennenswert ändert. Da diese seitliche Gleitlagerung auch kein Kippmoment hervorruft, verbleibt der Bremsbelag 10 in seiner parallelen Anlage zur Bremsscheibe, so daß auch jeglicher Umfangsschrägverschleiß verhindert werden kann.

Wenn beim Lösen der Bremse die Zuspannkraft abgebaut wird und das Bremsbelagmaterial 11 somit nicht mehr an der Bremsscheibe anliegt, wird von der Seitenkante 12c der Druckplatte 12 des Bremsbelags 10 auch keine Querkraft mehr auf die Platte 30a ausgeübt; die Platte 30a wird daher, wie bereits erwähnt, durch die Federkraft des Klemmabschnitts 30b entgegen der Zuspannrichtung Z wieder in die in Fig.1A gezeigte Ausgangslage zurückgebracht.

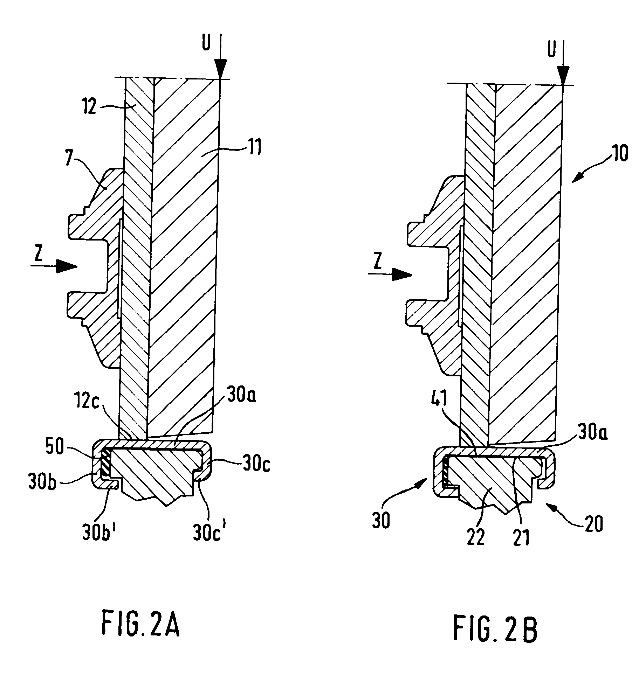

Eine zweite Ausführungsform des ersten Ausführungsbeispiels der Erfindung ist in den Figuren 2A und 2B dargestellt. Diese Ausführungsform unterscheidet sich von der ersten lediglich darin, daß in dem Zwischenraum 32 zwischen dem T-förmigen Bereich des Bremsbelagschachts 20 und dem Klemmabschnitt 30b ein Federelement 50 angeordnet ist, das beispielsweise aus Gummimaterial besteht. Da das Ende des Abschnitts 30b' nicht am T-förmigen Bereich anliegt, wie aus Fig.2A unmittelbar ersichtlich ist, wird die Platte 30a ausschließlich durch die Wirkung des Federelements 50 entgegen der Zuspannrichtung Z vorgespannt. Die Funktionsweise dieser Ausführungsform entspricht im übrigen der der vorstehend erläuterten Ausführungsform, so daß auf die dortigen Erläuterungen verwiesen werden darf.

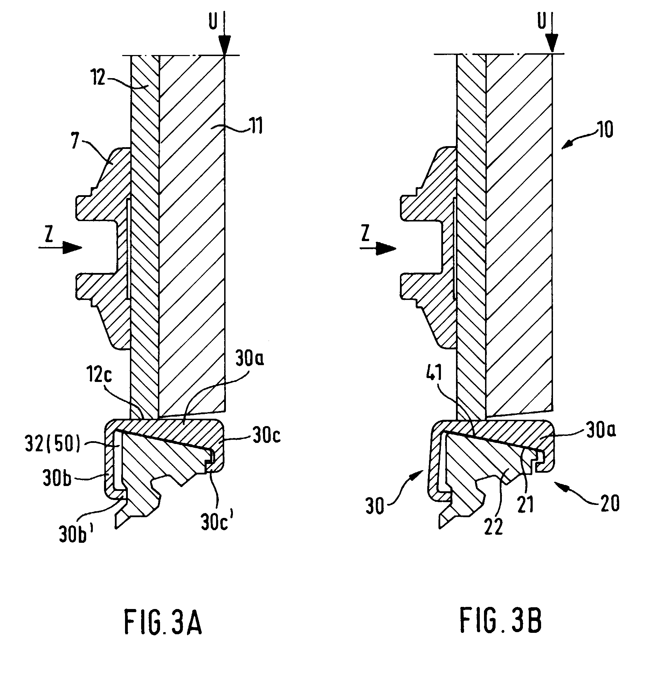

Eine dritte Ausführungsform des ersten Ausführungsbeispiels der Erfindung ist in den Figuren 3A und 3B dargestellt. Diese Ausführungsform unterscheidet sich von der ersten im wesentlichen dadurch, daß die der Wandfläche 21 des Bremsbelagschachts 20 zugewandte Fläche der Platte 30a als eine in der Zuspannrichtung Z abfallende schiefe Ebene ausgebildet ist. Die dieser schiefen Ebene 21 zugewandte Seitenfläche Platte 30a ist als hierzu komplementär verlaufende schiefe Ebene ausgebildet. D.h., die schiefe Ebene der Platte 30a hat - in Zuspannrichtung Z gesehen - einen ansteigenden Verlauf. Wenn sich die Bremsscheibe dreht, übt sie infolge ihrer Reibung mit dem Bremsbelagmaterial 11 des Bremsbelags 10 auf diesen eine bestimmte Kraft aus, die als parallel verlaufende Umfangskraft auf die schiefe Ebene übertragen wird. Diese Umfangskraft läßt sich in eine senkrecht zur Oberfläche der schiefen Ebene verlaufende Normalkraft und eine tangential zur Oberfläche der schiefen Ebene verlaufende Reibungskraft aufspalten, wenn angenommen wird, daß ein Kräftegleichgewicht vorliegt, bei dem der Winkel zwischen der Umfangskraft und der Normalkraft dem sogenannten Reibungswinkel (dieser wird in der Fachliteratur meist mit ρ bezeichnet) entspricht. In diesem Fall hat die "Hangabtriebskraft" an der schiefen Ebene genau den gleichen Wert wie die Reibungskraft, so daß diese kompensiert wird. Dies bedeutet, daß die resultierende Kraftkomponente in Zuspannrichtung Z gleich Null ist. Die mittig eingeleitete Zuspannkraft wird daher nicht mit einen Kippmoment beauf schlagt, so daß der Bremsbelag 10 völlig gleichmäßig gegen die Bremsscheibe gepreßt wird und das Risiko des Auftretens von Schrägverschleiß weiter verringert wird.

Auch bei der in den Figuren 3A und 3B dargestellten Ausführungsform kann die Vorspannung der Platte 30a ggf. durch ein in Zwischenraum 32 vorgesehenes Federelement 50 erzeugt werden.

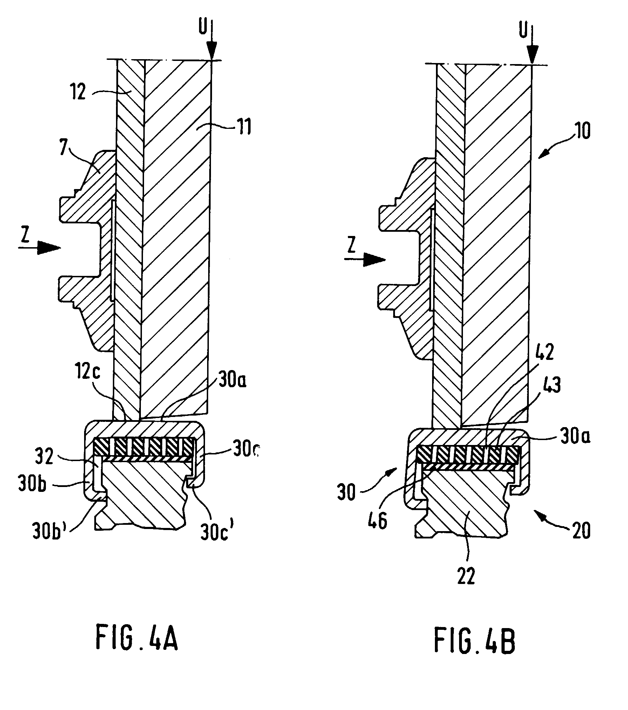

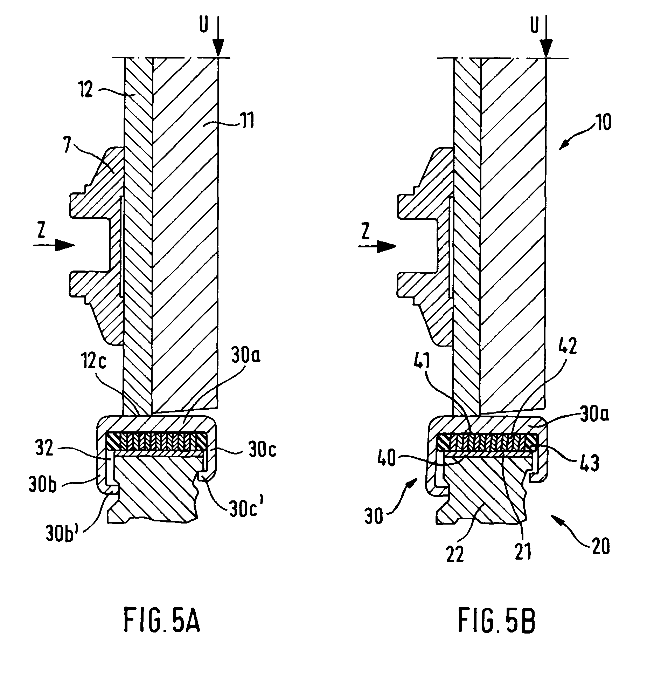

Unter Bezugnahme auf die Figuren 4 und 5 wird nunmehr ein zweites Ausführungsbeispiel der Erfindung näher beschrieben, das sich vom ersten Ausführungsbeispiel dadurch unterscheidet, daß als Gleitlagerfläche eine Stahllamellen-Lagerung vorgesehen ist. Bei der in den Figuren 4A und 4B gezeigten Variante dieses Ausführungsbeispiels sind Stahllamellen 42 rechtwinklig zwischen der inneren Fläche der Platte 30a und der Wandfläche 21 des Bremsbelagschachts 20 angeordnet. Die Stahllamellen 42 sind in Gummimaterial 43 eingebettet, das einerseits eine definierte Lage der Stahllamellen gewährleistet und andererseits eine eine Reibung verhindernde Kippbewegung der Stahllamellen gestattet. In der in Fig.4B gezeigten Zuspannlage sind die Stahllamellen 42 daher schräg nach unten geneigt. Gegebenenfalls kann in Erwägung gezogen werden, zwischen der Wandfläche 21 und den Stahllamellen 42 eine gehärtete Fläche 46 vorzusehen.

Die in den Figuren 5A und 5B gezeigte Variante dieses Auführungsbeispiels unterscheidet sich von der vorstehend beschriebenen dadurch, daß die Stahllamellen 42 lediglich am Rand von dem Gummimaterial 43 eingefaßt und gleichzeitig abgedichtet sind, so daß eine größere Anzahl von Stahllamellen 42 untergebracht werden kann. Diese Variante eignet sich daher für größere Belastungen.

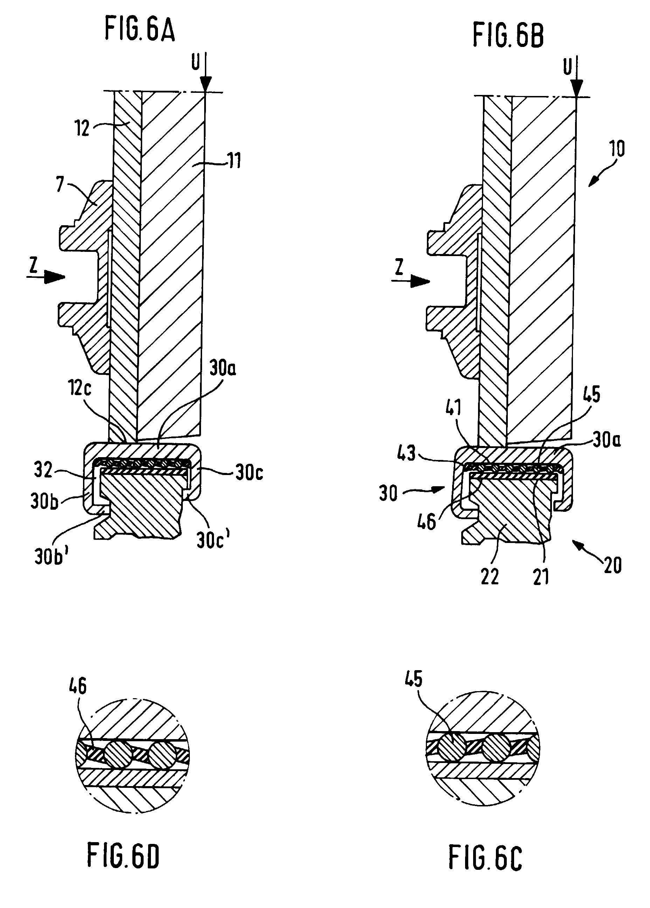

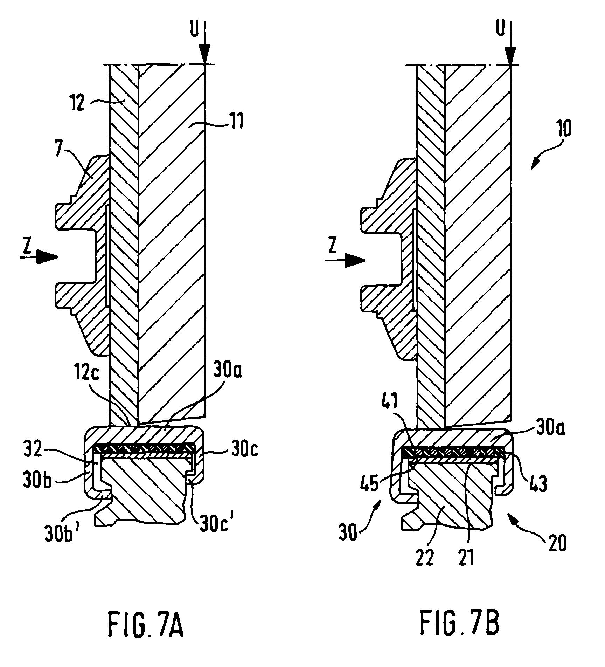

In den Figuren 6 und 7 ist ein drittes Ausführungsbeispiel der Erfindung gezeigt, bei dem für die Lagrung ein Rollenlager vorgesehen ist. Bei der in den Figuren 6A bis 6D gezeigten Ausführungsform sind Rollen 45 dieses Rollenlagers jeweils durch Gummimaterial-Streifen 46 miteinander verbunden; diese Gummimaterial-Streifen 46 bilden quasi einen Käfig für die Rollen 45, wobei sie gleichwohl eine gewisse, für die Zwecke der Erfindung völlig ausreichende Verdrehung der Rollen 45 ermöglichen, wie aus der vergrößerten Darstellung der Fig.6C und 6D unmittelbar ersichtlich ist (Fig.6C ist ein vergrößerter Ausschnitt der Fig.6A und Fig.6D ist ein solcher der Fig.6B). Die in den Figuren 7A und 7B gezeigte Variante unterscheidet sich von der vorstehenden lediglich dadurch, daß das Gummimaterial 46 die Rollen 45 fast vollständig einschließt. In diesem Fall ist ggf. dafür Sorge zu tragen, daß sich die Rollen 45 innerhalb des Gummimaterials 46 noch in gewissem Maße drehen können.

Auch bei diesen Rollenlagern ist zwischen der Wandfläche 21 und der jeweiligen Rollenlagerung 45 vorzugsweise eine gehärtete Fläche 46 vorgesehen.

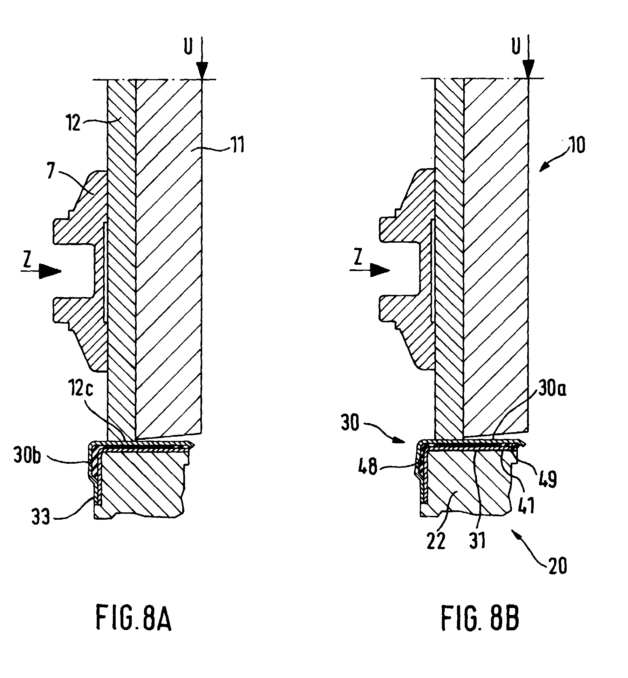

Bei dem in den Fig.8A und 8B gezeigten vierten Ausführungsbeispiel wird eine alternative Ausführungsform des Federbügelelements verwendet. Wie aus der Querschnittsdarstellung ohne weiteres ersichtlich ist, besteht dieses Federbügelelement aus einem ersten, dem Bremsbelag 10 zugewandten Element 30, das auch die Wand 30a bildet, und aus einem zweiten Element 31, das im wesentlichen ein L-Winkelstück ist und an einem entsprechend geformten Abschnitt des Bremsbelagschachts 20 beispielsweise durch Schweißen oder Kleben oder auch mit Hilfe von Schrauben oder Nieten befestigt ist. Die beiden Elemente 30 und 31 sind an einem Bereich 33 aneinander befestigt, wobei das erste Element 30 einen sich von dort erstreckenden und nach oben gerichteten Abschnitt 30b aufweist, der ein federndes Nachgeben der Wand 30a in Zuspannrichtung ermöglicht. Um eine Verschmutzung zu verhindern, ist unterhalb des Abschnitts 30b ein Gummimaterial 48 vorgesehen, das gleichzeitig die gewünschte Rückfederung unterstützt. Im Bereich zwischen der Platte 30a und dem gegenüberliegenden Abschnitt des zweiten Elements 31 ist ein vorzusgweise aus Teflon gebildetes Gleitlager 41 angeordnet. Ggf. kann jedoch auch eines der bei den vorstehend beschriebenen Ausführungsbeispielen gezeigten Lager verwendet werden. Am unteren Ende ist eine z.B. aus Gummi gebildete Dichtung 49 vorgesehen. Da die Funktionsweise dieses Ausführungsbeispiels der der anderen Ausführungsbeispiele entspricht, erscheint eine nochmalige Erläuterung entbehrlich zu sein.

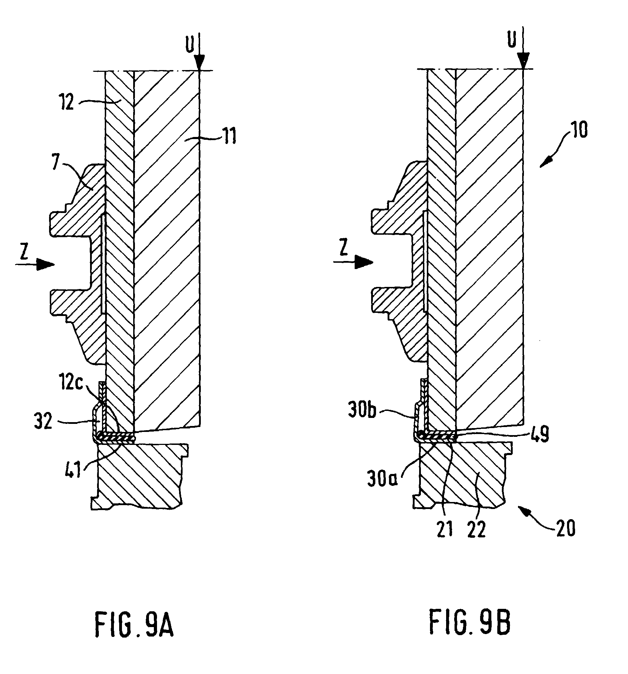

Das in den Fig.9A und 9B gezeigte fünfte Ausführungsbeispiel ist eine alternative Ausführungsform der Ausführungsform der Fig.8A und 8B, bei der das Federbügelelement 30, 31 nicht am Bremsbelagschacht 20, sondern vielmehr an der Druckplatte 12 des Bremsbelags 10 befestigt ist. Aufbau und Wirkungsweise entsprechen hingegen weitgehend der vorherigen Ausführungsform, so daß eine nochmalige Erläuterung sicher entbehrlich ist. Die vorliegende Ausführungsform hat den Vorteil, daß der Bremsbelagschacht 20 nicht modifiziert zu werden braucht, so daß die Nachrüstung bereits vorhandener Scheibenbremsen ohne weiters möglich ist. Diese Ausführungsform bietet sich auch dann an, wenn die bei den anderen Ausführungsbeispielen erforderliche Modifikation des Bremsbelagschachts aus Kostengründen oder Herstellungsschwierigkeiten nicht in Frage kommt.

Selbstverständlich ist es möglich, die in der Fig.3 gezeigte schiefe Ebene auch bei den übrigen Ausführungsbeispielen der Erfindung vorzusehen.

Es muß nicht weiter erwähnt werden, daß es sich empfiehlt, das erläuterte Prinzip der Erfindung auch bei dem in dem der Bremsscheibe gegenüberliegenden Belagschacht aufgenommenen Bremsbelag anzuwenden.

Bezüglich noch weiterer, nicht näher erläuterter Merkmale und Wirkungen der Erfindung wird im übrigen ausdrücklich auf die Zeichnung verwiesen.

## Patentansprüche

1. Zuspannvorrichtung (7) für eine Scheibenbremse, mit einem zwei in Zuspannrichtung verlaufende seitliche Führungsflächen aufweisenden Bremsbelagschacht (20) zur Aufnahme eines von der Zuspannvorrichtung (7) verschiebbaren Bremsbelags (10), der mit seinen beiden Seitenkanten an den Führungsflächen verschiebbar geführt ist und sich an der jeweils auslaufseitigen Führungsfläche abstützt, wenn er beim Bremsen an einer Bremsscheibe anliegt,
*dadurch gekennzeichnet,*
daß die jeweilige Führungsfläche des Bremsbelagschachts (20) durch eine Platte (30a) gebildet ist, die an der zugeordneten Wandfläche (21) des Bremsbelagschachts (20) sitzt und gegenüber der Wandfläche (21) in Zuspannrichtung über eine vorbestimmte Strecke roll- oder gleitverschiebbar gelagert ist.

2. Zuspannvorrichtung nach Anspruch 1, *dadurch gekennzeichnet, daß* die Platte (30a) entgegen der Zuspannrichtung derart vorgespannt ist, daß sie sich nach Lösen der Bremse wieder in ihre Ausgangsstellung zurückbewegt.

3. Zuspannvorrichtung nach Anspruch 2, *dadurch gekennzeichnet, daß* die Platte (30a) von einem vorzugsweise aus Gummimaterial bestehenden Federelement (50) entgegen der Zuspannrichtung vorgespannt ist.

4. Zuspannvorrichtung nach Anspruch 2 oder 3, *dadurch gekennzeichnet, daß* die Platte (30a) Teil eines Federbügelelements (30) ist.

5. Zuspannvorrichtung nach Anspruch 4, *dadurch gekennzeichnet, daß* das Federbügelelement (30) auf einem im wesentlichen mit einem T-förmigen Querschnitt ausgebildeten Bereich (22) des Bremsbelagschachts (20) sitzt.

6. Zuspannvorrichtung nach Anspruch 4, bei der der Bremsbelag (10) aus einem Bremsbelagmaterial (11) und einer von der Zuspannvorrichtung (7) beaufschlagten Druckplatte (12) besteht, *dadurch gekennzeichnet, daß* das Federbügelelement (30) an der Seitenkante der Druckplatte (12) befestigt ist.

7. Zuspannvorrichtung nach einem der Ansprüche 1 bis 6, *dadurch gekennzeichnet, daß* die Platte (30a) mittels eines Teflonlagers (41) gleitverschiebbar gegenüber der Wandfläche (21) des Bremsbelagschachts (20) gelagert ist.

8. Zuspannvorrichtung nach einem der Ansprüche 1 bis 6, *dadurch gekennzeichnet, daß* die Platte (30a) mittels einer Vielzahl von Stahllamellen (42) gleitverschiebbar gegenüber der Wandfläche (21) des Bremsbelagschachts (20) gelagert ist.

9. Zuspannvorrichtung nach Anspruch 8, *dadurch gekennzeichnet, daß* die Stahllamellen (42) in gegenseitigem Abstand in einem Gummimaterial (43) sitzen.

10. Zuspannvorrichtung nach einen der Ansprüche 1 bis 6, *dadurch gekennzeichnet, daß* die Platte (30a) mittels einer Vielzahl von Rollen (45) verschiebbar gegenüber der Wandfläche (21) des Bremsbelagschachts (20) gelagert ist.

11. Zuspannvorrichtung nach Anspruch 10, *dadurch gekennzeichnet, daß* die Rollen (45) in gegenseitigem Abstand in einem Gummimaterial (46) sitzen.

12. Zuspannvorrichtung nach einem der Ansprüche 1 bis 11, *dadurch gekennzeichnet, daß* die der Wandfläche (21) des Bremsbelagschachts (20) zugewandte Fläche der Platte (30a) als eine in Zuspannrichtung abfallende schiefe Ebene ausgebildet ist.

13. Zuspannvorrichtung nach einem der Ansprüche 1 bis 12, *dadurch gekennzeichnet, daß* die Platte (30a) zumindest an derjenigen Seite des Bremsbelagschachts (20) vorgesehen ist, die bei Vorwärtsfahrt des Fahrzeugs die Auslaufseite ist.

14. Bremsbelag (10) zur Aufnahme im Bremsbelagschacht (20) der Zuspannvorrichtung (7) einer Scheibenbremse, der mit seinen beiden Seitenkanten an zwei in Zuspannrichtung verlaufenden seitlichen Führungsflächen des Bremsbelagschachts (20) verschiebbar geführt ist und sich an der jeweils auslaufseitigen Führungsfläche abstützt, wenn er beim Bremsen an einer Bremsscheibe anliegt,
*dadurch gekennzeichnet,*
daß an der jeweiligen Seitenkante des Bremsbelags (10) eine Platte (30a) sitzt, die gegenüber der zugeordneten Seitenfläche (21) in Zuspannrichtung über eine vorbestimmte Strecke roll- oder gleitverschiebbar gelagert ist.

15. Bremsbelag nach Anspruch 14, *dadurch gekennzeichnet, daß* die Platte (30a) entgegen der Zuspannrichtung derart vorgespannt ist, daß sie sich nach Lösen der Bremse wieder in ihre Ausgangsstellung zurückbewegt.

16. Bremsbelag nach Anspruch 15, *dadurch gekennzeichnet, daß* die Platte (30a) von einem vorzugsweise aus Gummimaterial bestehenden Federelement (50) entgegen der Zuspannrichtung vorgespannt ist.

17. Bremsbelag nach Anspruch 15 oder 16, *dadurch gekennzeichnet, daß* die Platte (30a) Teil eines Federbügelelements (30) ist.

18. Bremsbelag nach Anspruch 17, bei dem der Bremsbelag (10) aus einem Bremsbelagmaterial (11) und einer von der Zuspannvorrichtung (7) beaufschlagten Druckplatte (12) besteht, *dadurch gekennzeichnet, daß* das Federbügelelement (30) an der Seitenkante der Druckplatte (12) befestigt ist.

19. Bremsbelag nach Anspruch 18, *dadurch gekennzeichnet, daß* die Platte (30a) mittels eines Teflonlagers (41) oder über eine Vielzahl von Stahllamellen (42) gleitverschiebbar oder mittels einer Vielzahl von Rollen (45) rollverschiebbar gegenüber der Seitenkante der Druckplatte (12) gelagert ist.

20. Bremsbelag nach einem der Ansprüche 14 bis 19, *dadurch gekennzeichnet, daß* die Platte (30a) zumindest an derjenigen Seite des Bremsbelags (10) vorgesehen ist, die bei Vorwärtsfahrt des Fahrzeugs die Auslaufseite ist.

## Claims

1. Brake applying device (7) for disk brakes, comprising a brake lining shaft (20) with two lateral guide surfaces extending in the brake application direction, which shaft serves to receive a brake lining (10) slidable by the brake applying device (7), which is slidingly guided by its two lateral edges on said guide surfaces and is supported on the respective guide surface at the run-out end when it bears against a brake disc during brake application,
*characterised in*
that said respective guide surface of said brake lining shaft (20) is formed by a plate (30a) disposed on the associated wall surface (21) and arranged for rolling or sliding displacement over a predetermined distance in the brake application direction opposite said wall surface (21).

2. Brake applying device according to Claim 1, *characterised in* that said plate (30a) is preloaded in a direction opposite to the direction of brake application, such that it will return again into its initial position after brake release.

3. Brake applying device according to Claim 2, *characterised in* that said plate (30a) is preloaded by a resilient element resilient element preferable formed by a rubber material in a direction opposite to the direction of brake application.

4. Brake applying device according to Claim 2 or 3, *characterised in* that said plate (30a) constitutes part of a spring clip element (30).

5. Brake applying device according to Claim 4, *characterised in* that said spring clip element (30) is mounted on a region (22) of said brake lining shaft (20) which has a substantially T-shaped cross-section.

6. Brake applying device according to Claim 4, wherein said brake lining (10) consists of a brake lining material (11) and a pressure plate (12) which the brake applying device (7) acts upon, *characterised in* that said spring clip element (30) is fastened on the lateral edge of said pressure plate (12).

7. Brake applying device according to any of the Claims 1 to 6, *characterised in* that said plate (30a) is supported by means of a Teflon bearing (41) such that it can be slidingly displaced opposite the wall surface (21) of said brake lining shaft (20).

8. Brake applying device according to any of the Claims 1 to 6, *characterised in* that said plate (30a) is supported by means of a plurality of steel lamella (42) in a way that it can be slidingly displace opposite the wall surface (21) of said brake lining shaft (20).

9. Brake applying device according to Claim 8, *characterised in* that said steel lamellae (42) are fastened in a rubber material (43) in a mutually spaced relationship.

10. Brake applying device according to any of the Claims 1 to 6, *characterised in* that said plate (30a) is supported by means of a plurality of rollers (45) for being displaced opposite the wall surface (21) of said brake lining shaft (20).

11. Brake applying device according to Claim 10, *characterised in* that said rollers (45) are fastened in a mutually spaced relationship in a rubber material.

12. Brake applying device according to any of the Claims 1 to 11, *characterised in* that the surface of said plate (30a), which faces said wall surface (21) of said brake lining shaft (20), is configured in the form of an inclined plane sloping in the direction of brake application.

13. Brake applying device according to any of the Claims 1 to 12, *characterised in* that said plate (30a) is provided at least on that side of said brake lining shaft (20) which in forward motion of the vehicle is the run-out end.

14. Brake lining (10) intended to be received in brake lining shaft (20) of the brake applying device (7) of a disc brake, which is guided so as to be displaceable by its two lateral edges on two lateral guide surfaces of the brake lining shaft (20), which extend in the direction of brake application, and which is supported on the respective guide surface at the run-out end when it bears against a brake disc in the course of brake application,
*characterised in*
that a plate (30a) is fixed at the respective lateral edge of said brake lining (10), which plate is supported for being displaced by rolling or sliding over a predetermined distance in the direction of brake application opposite said wall surface (21).

15. Brake lining according to Claim 14, *characterised in* that said plate (30) is preloaded in a direction opposite to the direction of brake application, such that it will return again into its initial position after brake release.

16. Brake lining according to Claim 15, *characterised in* that said plate (30a) is pre-loaded by a resilient element (30), preferably made of a rubber material, in a direction opposite to the direction of brake application.

17. Brake lining according to Claim 15 or 16, *characterised in* that said plate (30a) constitutes part of a spring clip element (30).

18. Brake lining according to Claim 17, wherein said brake lining (10) consists of a brake lining material (11) and a pressure plate (12), which the brake applying device (7) acts upon, *characterised in* that said spring clip element (30) is fixed at the lateral edge of said pressure plate (12).

19. Brake lining according to Claim 18, *characterised in* that said plate (30a) is supported by means of a Teflon bearing (41) or via a plurality of steel lamellae (42) for sliding displacement or by means of a plurality of rollers (45) for rolling displacement opposite said lateral edge of said pressure plate (12).

20. Brake lining according to any of the Claims 14 to 19, *characterised in* that said plate (30a) is provided at least on that side of said brake lining shaft (20) which in forward motion of the vehicle is the run-out end.

## Revendications

1. Dispositif de serrage (7) pour frein à disque, comprenant une cage de garniture de frein (20) à deux surfaces de guidage latérales, qui s'étendent en direction de serrage, laquelle cage sert à recevoir une garniture de frein (10) déplaçable par le dispositif de serrage (7), qui est guidée de façon déplaçable par ses deux arêtes latérales auxdites surfaces de guidage et qui s'appuie à la surface de guidage respective du côté de sortie quand elle porte contre une disque de frein au cours du freinage,
*caractérisé en ce*
que ladite surface de guidage respective de ladite cage de garniture de frein (20) est formée par une plaque (30a) fixée à la surface de paroi (21) affectée et logée à se déplacer par roulement ou déplacement glissant sur une distance déterminée en direction de serrage vis-à-vis ladite surface de paroi (21).

2. Dispositif de serrage selon la revendication 1, *caractérisé en ce* que ladite plaque (30a) est mise en précontrainte, en sens inverse de la direction de serrage, de façon qu'elle retourne encore dans sa position de départ après le desserrage du frein.

3. Dispositif de serrage selon la revendication 2, *caractérisé en ce* que ladite plaque (30a) est mise en précontrainte par un élément à ressort, formé de préférence en une matière en caoutchouc, in sens inverse de la direction de serrage.

4. Dispositif de serrage selon la revendication 2 ou 3, *caractérisé en ce* que ladite plaque (30a) constitue une partie d'un élément étrier de ressort (30).

5. Dispositif de serrage selon la revendication 4, *caractérisé en ce* que ledit élément étrier de ressort (30) est fixé sur une zone (22) de ladite cage de garniture de frein (20), qui présente une section transversale essentiellement en T.

6. Dispositif de serrage selon la revendication 4, dans lequel ladite garniture de frein (10) consiste en une matière de garniture de frein (11) et une plaque de compression (12) sur laquelle agit le dispositif de serrage (7) *caractérisé en ce* que ledit élément étrier de ressort (30) est fixé à l'arête latérale de ladite plaque de compression (12).

7. Dispositif de serrage selon une quelconque des revendications 1 à 6, *caractérisé en ce* que ladite plaque (30a) est logée moyennant un palier en téflon (41) de façon à être déplacée par glissement vis-à-vis la surface de paroi (21) de ladite cage de garniture de frein (20).

8. Dispositif de serrage selon une quelconque des revendications 1 à 6, *caractérisé en ce* que ladite plaque (30a) est logée moyennant une pluralité de lames en acier (42) de façon à être déplacée par glissement vis-à-vis la surface de paroi (21) de ladite cage de garniture de frein (20).

9. Dispositif de serrage selon la revendication 8, *caractérisé en ce* que lesdites lames en acier (42) sont fixées dans une matière en caoutchouc (43) aux écarts l'une de l'autre.

10. Dispositif de serrage selon une quelconque des revendications 1 à 6, *caractérisé en ce* que ladite plaque (30a) est logée moyennant une pluralité de rouleaux (45) de façon à être déplacée vis-à-vis la surface de paroi (21) de ladite cage de garniture de frein (20).

11. Dispositif de serrage selon la revendication 10, *caractérisé en ce* que lesdits rouleaux (45) sont fixés aux écarts l'un de l'autre dans une matière en caoutchouc.

12. Dispositif de serrage selon une quelconque des revendications 1 à 11, *caractérisé en ce* que la surface de ladite plaque (30a), qui est en face de ladite surface de paroi (21) de ladite cage de garniture de frein (20), est configurée sous forme d'un plan en pente en direction de serrage.

13. Dispositif de serrage selon une quelconque des revendications 1 à 12, *caractérisé en ce* que ladite plaque (30a) est disposée au moins de ce côté de ladite cage de garniture de frein (20), qui, en marche en avant du véhicule, est le côté de sortie.

14. Garniture de frein (10) destinée à être reçue dans ladite cage de garniture de frein (20) du dispositif de serrage (7) de frein à disque, qui est guidée de façon déplaçable par ses deux arêtes latérales à deux surfaces de guidage latérales de la cage de garniture de frein (20), qui s'étendent en direction de serrage, et qui s'appuie à la surface de guidage respective du côté de sortie quand elle porte contre une disque de frein au cours du freinage,
*caractérisé en ce*
qu'une plaque (30a) est fixée à l'arête latérale respective de ladite garniture de frein (10), laquelle plaque est logée à se déplacer par roulement ou déplacement glissant sur une distance déterminée en direction de serrage vis-à-vis ladite surface de paroi (21).

15. Garniture de frein selon la revendication 14, *caractérisée en ce* que ladite plaque (30) est mise en précontrainte en sens inverse de la direction de serrage, de façon qu'elle retourne encore dans sa position de départ après le desserrage du frein.

16. Garniture de frein selon la revendication 15, *caractérisée en ce* que ladite plaque (30a) est mise en précontrainte par un élément à ressort (30), de préférence en une matière en caoutchouc, en sens inverse de la direction de serrage.

17. Garniture de frein selon la revendication 15 ou 16, *caractérisée en ce* que ladite plaque (30a) constitue une partie d'un élément étrier de ressort (30).

18. Garniture de frein selon la revendication 17, dans laquelle ladite garniture de frein (10) consiste en une matière de garniture de frein (11) et une plaque de compression (12), sur laquelle agit le dispositif de serrage (7), *caractérisée en ce* que ledit élément étrier de ressort (30) est fixé à l'arête latérale de ladite plaque de compression (12).

19. Garniture de frein selon la revendication 18, *caractérisée en ce* que ladite plaque (30a) est logée moyennant un palier en téflon (41) ou via une pluralité de lames en acier (42) de façon à être déplacée par glissement ou moyennant une pluralité de rouleaux (45) de façon à être déplacée par roulement vis-à-vis ladite arête latérale de ladite plaque de compression (12).

20. Garniture de frein selon une quelconque des revendications 14 à 19, *caractérisée en ce* que ladite plaque (30a) est disposé au moins de ce côté de ladite cage de garniture de frein (20), qui, en marche en avant du véhicule, est le côté de sortie.
